# EUROPÄISCHE PATENTSCHRIFT

(11) **EP 4 048 428 B1**
(45) Veröffentlichungstag und Bekanntmachung des Hinweises auf die Patenterteilung: **28.08.2024**
(21) Anmeldenummer: 20793692.3
(22) Anmeldetag: 21.10.2020
(51) Int. Cl.: B01D 46/00, B01D 46/24

(54) **ABSCHEIDEVORRICHTUNG ZUR ABSCHEIDUNG VON FLÜSSIGKEIT AUS GAS, INSBESONDERE LUFT, UND ABSCHEIDESYSTEM EINER MASCHINE**
SEPARATING APPARATUS FOR SEPARATING LIQUID FROM GAS, IN PARTICULAR AIR, AND SEPARATING SYSTEM OF A MACHINE
APPAREIL DE SÉPARATION POUR SÉPARER UN LIQUIDE D'UN GAZ, EN PARTICULIER DE L'AIR, ET SYSTÈME DE SÉPARATION D'UNE MACHINE

(30) Priorität: 21.10.2019 DE 102019128397
(43) Veröffentlichungstag der Anmeldung: 31.08.2022
(73) Patentinhaber: MANN+HUMMEL GmbH, 71636 Ludwigsburg (DE)
(72) Erfinder: BARTELT, Bertram, 71711 Steinheim (DE); BIEBRICHER, Peter, 68309 Mannheim (DE); DWORATZEK, Klemens, 68535 Edingen (DE)
(74) Vertreter: Mann + Hummel Intellectual Property
(86) Internationale Anmeldenummer: PCT/EP2020/079568
(87) Internationale Veröffentlichungsnummer: WO 2021/078771

(56) Entgegenhaltungen:
- WO-A1-2019/024991
- DE-A1- 1 619 866
- DE-A1- 102013 020 499
- DE-A1- 102017 011 874
- DE-U1- 202006 019 003

## Beschreibung

### Technisches Gebiet

Die Erfindung betrifft eine Abscheidevorrichtung zur Abscheidung von Flüssigkeit aus Gas, insbesondere Luft, mit einem Gehäuse, welches aufweist
- eine Verbindungseinrichtung, mit welcher die Abscheidevorrichtung mittels einer Dreh- und/oder Steckbewegung bezüglich einer gedachten Verbindungsachse mit einem Anschlusskopf einer Maschine trennbar verbunden werden kann,
- wenigstens einen Gaseinlass für das von Flüssigkeit zu befreiende Gas,
- wenigstens einen Gasauslass für das von Flüssigkeit befreite Gas, welcher die Verbindungsachse umfangsmäßig umgibt,
- und wenigstens einen Flüssigkeitsablauf für abgeschiedene Flüssigkeit,
- wobei in dem Gehäuse wenigstens ein von dem Gas durchströmbares Abscheidemedium angeordnet ist, welches den wenigstens einen Gaseinlass bezüglich der Gasströmung von dem wenigstens einen Gasauslass trennt,
- wobei der wenigstens eine Gasauslass und der wenigstens eine Flüssigkeitsablauf auf der Seite aus dem Gehäuse führen, auf der die Verbindungseinrichtung angeordnet ist,
- wobei der wenigstens eine Flüssigkeitsablauf aus einem Flüssigkeitssammelraum heraus führt, der auf einer Reingasseite des Abscheidemediums angeordnet ist und der die Verbindungsachse und den wenigstens einen Gasauslass umfangsmäßig umgibt,
- wobei in dem Gehäuseinnenraum des Gehäuses ein Rohrabschnitt zu dem wenigstens einen Gasauslass führt, der die Verbindungsachse umfangsmäßig umgibt und der eine radial innere Begrenzung des Flüssigkeitssammelraums wenigstens mit bildet.

Ferner betrifft die Erfindung ein Abscheidesystem einer Maschine
- mit wenigstens einer Abscheidevorrichtung zur Abscheidung von Flüssigkeit aus Gas, insbesondere Luft, mit einem Gehäuse, welches aufweist
- eine Verbindungseinrichtung, mit welcher die Abscheidevorrichtung mittels einer Dreh- und/oder Steckbewegung bezüglich einer gedachten Verbindungsachse mit einem Anschlusskopf einer Maschine trennbar verbunden ist,
- wenigstens einen Gaseinlass für das von Flüssigkeit zu befreiende Gas,
- wenigstens einen Gasauslass für das von Flüssigkeit befreite Gas, welcher die Verbindungsachse umfangsmäßig umgibt,
- und wenigstens einen Flüssigkeitsablauf für abgeschiedene Flüssigkeit,
- wobei in dem Gehäuse wenigstens ein von dem Gas durchströmbares Abscheidemedium angeordnet ist, welches den wenigstens einen Gaseinlass bezüglich der Gasströmung von dem wenigstens einen Gasauslass trennt,
- wobei der wenigstens eine Gasauslass und der wenigstens eine Flüssigkeitsablauf auf der Seite aus dem Gehäuse führen, auf der die Verbindungseinrichtung angeordnet ist, - wobei der wenigstens eine Flüssigkeitsablauf aus einem Flüssigkeitssammelraum heraus führt, der auf einer Reingasseite des Abscheidemediums angeordnet ist und der die Verbindungsachse und den wenigstens einen Gasauslass umfangsmäßig umgibt,
- wobei in dem Gehäuseinnenraum des Gehäuses ein Rohrabschnitt zu dem wenigstens einen Gasauslass führt, der die Verbindungsachse umfangsmäßig umgibt und der eine radial innere Begrenzung des Flüssigkeitssammelraums wenigstens mit bildet
- und mit einem Anschlusskopf zum Anschließen der wenigstens einen Abscheidevorrichtung, an welchem ein Anschlussstutzen angeordnet ist, der mit der Verbindungseinrichtung der Abscheidevorrichtung trennbar verbunden ist.

### Stand der Technik

Aus DE 10 2014 000 281 A1 ist eine Vorrichtung, beispielsweise ein Ölabscheider oder ein Kraftstofffilter, zum Abscheiden von Flüssigkeit aus Luft bekannt. Die Vorrichtung hat ein becherförmiges Gehäuse mit darin angeordnetem, als ringförmiger Coalescer ausgebildetem Filterelement, beispielsweise einem sogenannten Spin-on-Filter. Zum Verschließen seiner offenen Stirnseite weist das becherförmige Gehäuse einen Gehäusedeckel auf. Dieser Gehäusedeckel weist zum Abführen der gefilterten Reinluft eine Öffnung auf. In der Öffnung ist ein sich durch den Gehäusedeckel in Richtung der Längsachse des becherförmigen Gehäuse erstreckender Nippel aufgenommen. Der Gehäusedeckel ist lösbar mit dem Nippel verbindbar. Der mit dem Nippel lösbar verbindbare Bereich des Gehäusedeckels ist derart ausgebildet, dass im verbundenen Zustand des Gehäusedeckels mit dem Nippel zwischen Gehäusedeckel und Nippel mindestens ein Flüssigkeitsablauf, etwa ein Öldurchlaufkanal beziehungsweise Verbindungskanal zum Ableiten der abgeschiedenen Flüssigkeit aus dem Innenraum des becherförmigen Gehäuses angeordnet ist. Zum Zuführen von Rohluft in das becherförmige Gehäuse weist der Gehäusedeckel mindestens einen außermittig angeordneten Rohlufteinlass auf. Zum Ableiten der Reinluft aus dem becherförmigen Gehäuse weist der Nippel einen zentralen Reinluftauslass auf, der einstückig mit dem Nippel ausgebildet ist.

Eine weitere gattungsgemäße Vorrichtung ist aus WO 2019/024991 A1 bekannt. Es werden ein Gehäuse einer Einrichtung zur Abscheidung wenigstens eines Fluids, insbesondere Öl, aus Gas, insbesondere Luft, eines Kompressors, einer Druckluftanlage oder einer Vakuumpumpe, ein Fluidauslass-Dichtungsteil, ein Gehäusedeckel, ein Verbindungsteil einer Einrichtung und eine Einrichtung und eine Vorrichtung zur Abscheidung eines Fluids beschrieben. Das Gehäuse umfasst wenigstens einen ersten Gasdurchlass, der bezüglich einer Achse zentral angeordnet ist, wenigstens einen zweiten Gasdurchlass, der bezüglich der Achse radial außerhalb des wenigstens einen ersten Gasdurchlasses angeordnet ist, und wenigstens einen Fluidauslass für den von dem Gas abgeschiedenes Fluid, der bezüglich der Achse radial zwischen dem wenigstens einen ersten Gasdurchlass und dem wenigstens einen zweiten Gasdurchlass angeordnet ist. Fluidtechnisch zwischen dem wenigstens einen zweiten Gasdurchlass und dem wenigstens einen Fluidauslass ist wenigstens ein gehäuseseitiges Fluidauslass-Dichtungsteil wenigstens einer Fluidauslass-Dichteinrichtung angeordnet. Das wenigstens eine gehäuseseitige Fluidauslass-Dichtungsteil kann mit wenigstens einem entsprechenden verbindungsseitigen Fluidauslass-Dichtungsteil eines Verbindungsteils, das zur Verbindung des Gehäuses mit der Anschlusseinrichtung vorgesehen ist, dichtend zusammenwirken. Wenigstens ein gehäuseseitiges Fluidauslass-Dichtungsteil weist wenigstens einen ringförmigen Dichtungsabschnitt mit wenigstens einer wenigstens nach radial innen wirkenden Dichtungsfläche und/oder mit wenigstens einer nach radial außen wirkenden Dichtungsfläche auf.

Der Erfindung liegt die Aufgabe zugrunde, eine Abscheidevorrichtung und ein Abscheidesystem der eingangs genannten Art zu gestalten, bei denen eine Verbindung zwischen der Abscheidevorrichtung und dem Anschlusskopf einfacher realisiert werden kann. Insbesondere soll ein montage- und/oder bauteilbedingter Aufwand beim Austausch der Abscheidevorrichtung verringert werden.

### Offenbarung der Erfindung

Diese Aufgabe wird bei der Abscheidevorrichtung dadurch gelöst, dass der Rohrabschnitt funktional von mechanischen kraftübertragenden Verbindungselementen der Verbindungseinrichtung getrennt ist.

Erfindungsgemäß ist der Rohrabschnitt bezüglich einer mechanischen Kraftübermittlung getrennt von der eigentlichen Verbindungseinrichtung realisiert. So kann die Funktion der Abgrenzung des Flüssigkeitssammelraums von dem wenigstens einen Gasauslass funktional getrennt werden von der Haltefunktion der Verbindungseinrichtung zum Halten der Abscheidevorrichtung an dem Anschlusskopf. Im Unterschied dazu ist bei der aus dem Stand der Technik bekannten Vorrichtung der dortige Nippel als Rohrstück innerhalb des Behälterinnenraums zum Trennen des Gasauslasses von dem Flüssigkeitssammelraum und außerhalb des Behälters zum Einschrauben in den Anschlusskopf der Maschine vorgesehen. Mithilfe der erfindungsgemäßen Trennung dieser beiden Funktionen kann außerdem ein Anschlussstutzen aufseiten des Anschlusskopfes entsprechend kürzer ausgestaltet sein. Das kopfseitige Verbindungselement muss lediglich bis in eine Verbindungsaufnahme aufseiten des Gehäuses der erfindungsgemäßen Abscheidevorrichtung reichen. Der benötigte Bauraum auf Seiten des Anschlusskopfs kann so verringert werden. So kann die Abscheidevorrichtung einfacher montiert werden.

Der wenigstens eine Gasauslass umgibt die Verbindungsachse umfangsmäßig. Auf diese Weise kann der wenigstens eine Gasauslass bezüglich der Verbindungsachse zentral angeordnet sein.

Der Rohrabschnitt umgibt die Verbindungsachse umfangsmäßig und bildet eine radial innere Begrenzung des Flüssigkeitssammelraums wenigstens mit. Mithilfe des Rohrabschnitts kann verhindert werden, dass abgeschiedene Flüssigkeit, welche sich in dem Flüssigkeitssammelraum sammelt, in den wenigstens einen Gasauslass gelangen und so das bereits von Flüssigkeit befreite Reingas wieder kontaminieren kann.

Der wenigstens eine Gasauslass und der wenigstens eine Flüssigkeitsablauf führen auf der Seite aus dem Gehäuse, auf der die Verbindungseinrichtung angeordnet ist. Auf diese Weise können der wenigstens eine Gasauslass und der wenigstens eine Flüssigkeitsablauf mithilfe der Verbindungseinrichtung einfacher mit einem entsprechenden Gasabfuhrkanal beziehungsweise einem entsprechenden Ölablaufkanal aufseiten des Anschlusskopfs verbunden werden.

Vorteilhafterweise kann das Gehäuse einen insbesondere becherförmigen Gehäusetopf aufweisen. Die offene Seite des Gehäusetopfs kann mit einem Gehäusedeckel verschlossen werden. Der Gehäusedeckel kann nach dem Einbau des wenigstens einen Abscheidemediums nicht zerstörungsfrei trennbar mit dem Gehäusetopf verbunden werden. Bevorzugt sind Gehäuse und Gehäusedeckel aus Metall, bevorzugt Stahlblech gebildet.

Vorteilhafterweise kann der Gehäusedeckel mittels einer Bördelverbindung, insbesondere mithilfe eines Verbindungsblechs, mit dem Gehäusetopf verbunden werden. Auf diese Weise kann eine einfache, fluiddichte und stabile Verbindung zwischen dem Gehäusedeckel und dem Gehäusetopf realisiert werden. Statt einer Bördelverbindung kann eine Schweißverbindung verwendet werden.

Vorteilhafterweise kann wenigstens ein Teil der Verbindungseinrichtung an dem Gehäusedeckel realisiert sein. Auf diese Weise können entsprechende mechanische Kräfte bei der Verbindung der Abscheidevorrichtung mit dem Anschlusskopf im Wesentlichen von dem Gehäusedeckel aufgenommen werden. Der Gehäusetopf und das darin enthaltene wenigstens eine Abscheidemedium können so von den entsprechenden mechanischen Kräften, welche zwischen der Abscheidevorrichtung und dem Anschlusskopf wirken, entlastet werden. Auf diese Weise können die Anforderungen an die mechanische Stabilität des Gehäusetopfs und des wenigstens einen Abscheidemediums entsprechend verringert werden.

Vorteilhafterweise kann an dem Gehäuse, insbesondere dem Gehäusedeckel, wenigstens eine Dichteinrichtung zum Abdichten von fluidführenden Bereichen im Gehäuse und zwischen dem Gehäuse und dem Anschlusskopf angeordnet sein. Die wenigstens eine Dichteinrichtung kann automatisch beim Verbinden der Abscheidevorrichtung mit dem Anschlusskopf aktiviert werden.

Die Abscheidevorrichtung kann mittels einer Dreh- und/oder Steckbewegung bezüglich einer gedachten Verbindungsachse mit dem Anschlusskopf einer Maschine trennbar verbunden werden. Dabei kann es sich um eine reine Drehbewegung, eine reine Steckbewegung oder eine kombinierte Dreh-/Steckbewegung handeln. Kombinierte Dreh-/Steckbewegungen werden insbesondere bei Schraubverbindungen oder bajonettverschlussartigen Verbindungen ausgeführt. Bei Schraubverbindungen wird durch das Drehen der beteiligten Gewinde relativ zueinander eine Steckbewegung realisiert.

Die Verbindungseinrichtung kann vorteilhafterweise wenigstens ein Verbindungselement, insbesondere ein Gewinde, einer Dreh- und/oder Steckverbindung, insbesondere einer Schraubverbindung oder einer bajonettverschlussartigen Verbindung, aufweisen.

Vorteilhafterweise kann die Abscheidevorrichtung als sog. Spin-On Vorrichtung, insbesondere Spin-On-Filter, auch bekannt als Aufschraubwechselfilter, realisiert sein. Auf diese Weise kann sie einfach auf den Anschlusskopf aufgedreht und entsprechend von diesem abgedreht werden.

Vorteilhafterweise kann das wenigstens eine Abscheidemedium wenigstens ein Koaleszenzmedium aufweisen. Das wenigstens eine Abscheidemedium kann Teil eines Abscheideeinsatzes, insbesondere Koaleszenzeinsatzes, sein.

Vorteilhafterweise kann das wenigstens eine Abscheidemedium einen Innenraum und/ oder die Verbindungsachse umfangsmäßig umgeben. Das wenigstens eine Abscheidemedium, insbesondere der Abscheideeinsatz, kann vorteilhafterweise in Verbindung mit einem sogenannten Rundfilterelement realisiert sein.

Vorteilhafterweise kann die Abscheidevorrichtung in Verbindung mit Maschinen verwendet werden, bei denen Gas, insbesondere Luft, mit Öl belastet wird, wobei mit der Abscheidevorrichtung das Gas von dem Öl wieder befreit werden soll. Vorteilhafterweise kann die Abscheidevorrichtung in Verbindung mit insbesondere ölgeschmierten Kompressoren, Brennkraftmaschinen, Luftentölboxen oder dergleichen verwendet werden.

Bei einer erfindungsgemäßen Ausführungsform kann sich der Rohrabschnitt ausschließlich im Gehäuseinnenraum des Gehäuses erstrecken. Auf diese Weise kann ein entsprechender Platzbedarf an der Außenseite des Gehäuses verringert werden. Im Unterschied dazu erstreckt sich der aus dem Stand der Technik bekannte Nippel auch außerhalb des Behälterinnenraums. Der Verbindungsstutzen aufseiten des Anschlusskopfes kann erfindungsgemäß deutlich kürzer ausgestaltet sein als der aus dem Stand der Technik bekannte Nippel. Auf diese Weise kann Material, insbesondere Metall, eingespart werden.

Bei einer weiteren vorteilhaften Ausführungsform kann der Rohrabschnitt mit einem Befestigungsende direkt oder indirekt, insbesondere fest, mit dem Gehäuse verbunden sein. Auf diese Weise kann der Rohrabschnitt nicht zerstörungsfrei trennbar von der Abscheidevorrichtung sein. Die Abscheidevorrichtung kann einschließlich des Rohrabschnitts einfacher hergestellt, montiert und ausgetauscht werden.

Alternativ oder zusätzlich kann der Rohrabschnitt direkt oder indirekt, insbesondere fest, mit einem Abscheideeinsatz der Abscheidevorrichtung verbunden sein, welcher in dem Gehäuse angeordnet ist. Auf diese Weise kann der Rohrabschnitt gemeinsam mit dem Abscheideeinsatz hergestellt und/oder montiert werden.

Bei einer weiteren vorteilhaften Ausführungsform kann das freie Ende des Rohrabschnitts eine radial äußere Umfangswandung des Flüssigkeitssammelraums in bezüglich der Verbindungsachse axialer Richtung überragen. Auf diese Weise kann auch bei stärkeren Gasströmungen verhindert werden, dass in dem Flüssigkeitssammelraum gesammelte Flüssigkeit über den freien Rand des Rohrabschnitts schwappen und in den wenigstens einen Gasauslass gelangen kann.

Bei einer weiteren vorteilhaften Ausführungsform kann der wenigstens eine Gasauslass als Verbindungsaufnahme für einen Verbindungsstutzen ausgestaltet sein, wobei der Verbindungsstutzen fest oder trennbar mit dem Anschlusskopf verbunden ist oder werden kann. Auf diese Weise können platzsparend die Durchlassfunktion und die Haltefunktion miteinander kombiniert werden. In die Verbindungsaufnahme kann der Verbindungsstutzen mit einer Dreh- und/oder Steckbewegung eingebracht werden.

Bei einer weiteren vorteilhaften Ausführungsform kann ein Innendurchmesser des Rohrabschnitts zumindest im Bereich seines Befestigungsendes größer sein als ein Innendurchmesser des wenigstens einen Gasauslasses. Auf diese Weise können Turbulenzen bei der Gasströmung an der Übergangsstelle zwischen dem Rohrabschnitt und dem Gasauslass verringert, insbesondere vermieden werden.

Vorteilhafterweise kann ein Innendurchmesser des Rohrabschnitts zumindest im Bereich seines Befestigungsendes größer sein als ein Innendurchmesser eines Verbindungsstutzens. Auf diese Weise können Turbulenzen weiter verringert werden.

Bei einer weiteren vorteilhaften Ausführungsform kann der Rohrabschnitt aus Kunststoff sein. Auf diese Weise kann der Rohrabschnitt einfacher, kostengünstiger und/oder mit einem geringeren Gewicht realisiert werden als dies bei Rohrabschnitten aus Metall der Fall ist. Die Verwendung von Kunststoff ist dadurch möglich, dass auf den Rohrabschnitt deutlich kleinere mechanische Kräfte einwirken, als auf den aus dem Stand der Technik bekannten Nippel.

Bei einer weiteren vorteilhaften Ausführungsform kann der wenigstens eine Gasauslass koaxial zur Verbindungssachse angeordnet sein. Auf diese Weise kann ein Verbindungsstutzen aufseiten des Anschlusskopfs mit der Dreh- und/oder Steckbewegung um die Verbindungsachse in den wenigstens einen Gasauslass eingebracht werden, welcher dann als Verbindungsaufnahme wirken kann.

Vorteilhafterweise kann der wenigstens eine Gasauslass kreisförmig ausgestaltet sein. Auf diese Weise ist der wenigstens eine Gasauslass rotationssymmetrisch, was insbesondere bei einer Schraubverbindung von Vorteil ist.

Bei einer weiteren vorteilhaften Ausführungsform kann ein den wenigstens einen Gasauslass umgebender Teil des Gehäuses ein mechanisches Verbindungselement der Verbindungseinrichtung aufweisen. Auf diese Weise kann das mechanische Verbindungselement einfach und platzsparend realisiert werden. Das mechanische Verbindungselement kann so kraftübertragend direkt mit dem Gehäuse verbunden sein. So kann der Rohrabschnitt von Verbindungskräften zwischen dem Gehäuse und dem Anschlusskopf freigehalten werden. Die funktionale Trennung zwischen dem Rohrabschnitt und dem mechanischen Verbindungselement kann so sichergestellt werden.

Vorteilhafterweise kann das mechanische Verbindungselement ein Gewinde oder ein Teil einer bajonettverschlussartigen Verbindung sein.

Vorteilhafterweise kann der wenigstens eine Gasauslass von einem Innengewinde umgeben sein. Das Innengewinde kann einfach mit einem entsprechenden Außengewinde aufseiten des Anschlusskopfs, insbesondere an einem Verbindungsstutzen aufseiten des Anschlusskopfs, zusammenwirken.

Bei einer weiteren vorteilhaften Ausführungsform kann wenigstens ein Gaseinlass auf derselben Seite in das Gehäuse führen, auf der der Flüssigkeitsablauf und der wenigstens eine Gasauslass aus dem Gehäuse führen. Auf diese Weise können alle Fluidverbindungen auf derselben Seite des Gehäuses angeordnet werden. Dies vereinfacht die Anbindung der Abscheidevorrichtung an den Anschlusskopf.

Vorteilhafterweise kann der wenigstens eine Flüssigkeitsablauf zwischen dem wenigstens einen Gasauslass und dem wenigstens einen Gaseinlass angeordnet sein. Auf diese Weise kann der Flüssigkeitsablauf platzsparend in der Nähe des wenigstens einen Gasauslasses angeordnet sein. So können die entsprechenden Fluidkanäle auf Seiten des Anschlusskopfs platzsparender realisiert werden.

Bei einer weiteren vorteilhaften Ausführungsform können der wenigstens eine Gasauslass und der wenigstens eine Flüssigkeitsablauf von wenigstens einer ringförmigen Dichteinrichtung umgeben sein. Auf diese Weise können der wenigstens eine Gasauslass und der wenigstens eine Flüssigkeitsablauf nach außen hin und/oder zu dem wenigstens einen Gaseinlass hin abgedichtet werden.

Bei einer weiteren vorteilhaften Ausführungsform kann zwischen dem wenigstens einen Flüssigkeitsablauf und dem wenigstens einen Gaseinlass wenigstens eine Dichteinrichtung angeordnet sein. Auf diese Weise kann der wenigstens eine Flüssigkeitsablauf von dem wenigstens einen Gasauslass flüssigkeitsdicht getrennt werden. So kann verhindert werden, dass abgeschiedene Flüssigkeit zurück in das gereinigte Gas gelangen kann.

Die Aufgabe wird bei dem Abscheidesystem erfindungsgemäß dadurch gelöst, dass der Rohrabschnitt funktional von mechanischen kraftübertragenden Verbindungselementen der Verbindungseinrichtung getrennt ist.

Im Übrigen gelten die im Zusammenhang mit der erfindungsgemäßen Abscheidevorrichtung und dem erfindungsgemäßen Abscheidesystem und deren jeweiligen vorteilhaften Ausgestaltungen aufgezeigten Merkmale und Vorteile untereinander entsprechend und umgekehrt. Die einzelnen Merkmale und Vorteile können selbstverständlich untereinander kombiniert werden, wobei sich weitere vorteilhafte Wirkungen einstellen können, die über die Summe der Einzelwirkungen hinausgehen.

### Kurze Beschreibung der Zeichnungen

Weitere Vorteile, Merkmale und Einzelheiten der Erfindung ergeben sich aus der nachfolgenden Beschreibung, in der Ausführungsbeispiele der Erfindung anhand der Zeichnung näher erläutert werden. Der Fachmann wird die in der Zeichnung, der Beschreibung und den Ansprüchen in Kombination offenbarten Merkmale zweckmäßigerweise auch einzeln betrachten und zu sinnvollen weiteren Kombinationen zusammenfassen. Es zeigen schematisch:
- Figur 1: einen Längsschnitt einer Abscheidevorrichtung zur Abscheidung von Flüssigkeit aus Gas gemäß einem ersten Ausführungsbeispiel, welche an einem Anschlusskopf einer Maschine trennbar angeordnet ist;
- Figur 2: eine Detaildarstellung des Längsschnittes aus Figur 1 im Bereich eines Gehäusedeckels der Abscheidevorrichtung;
- Figur 3: eine isometrische Darstellung der geschnittenen Abscheidevorrichtung an dem Anschlusskopf aus Figur 1;
- Figur 4: einen Längsschnitt einer Abscheidevorrichtung zur Abscheidung von Flüssigkeit aus Gas gemäß einem zweiten Ausführungsbeispiel;
- Figur 5: einen Längsschnitt einer Abscheidevorrichtung zur Abscheidung von Flüssigkeit aus Gas gemäß einem dritten Ausführungsbeispiel.

In den Figuren sind gleiche Bauteile mit gleichen Bezugszeichen versehen.

### Ausführungsform(en) der Erfindung

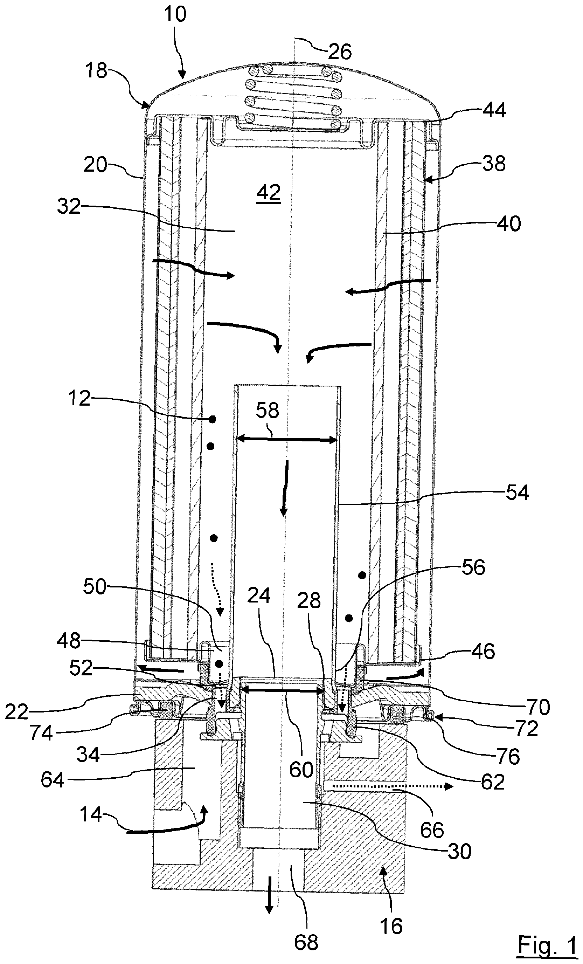

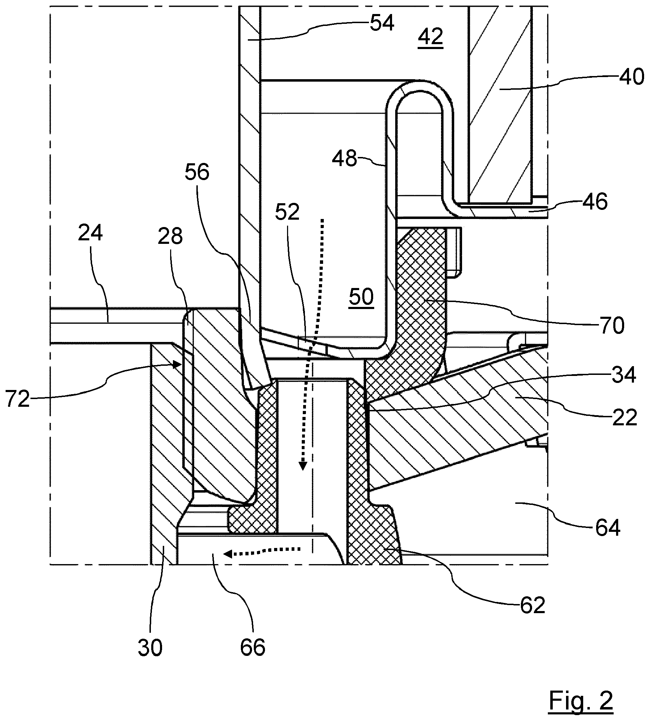

In Figuren 1 bis 3 ist eine Abscheidevorrichtung 10 für Flüssigkeit, beispielsweise Öl 12, aus Gas 14, beispielsweise Luft, gemäß einem ersten Ausführungsbeispiel im Längsschnitt, in einer Detailansicht und in einer isometrischen Darstellung gezeigt. Die Abscheidevorrichtung 10 ist beispielhaft an einem Anschlusskopf 16 eines ansonsten nicht gezeigten Maschine, insbesondere eines ölgeschmierten Kompressors, lösbar befestigt. Mit der Abscheidevorrichtung 10 wird das Kompressorgas 14 von Öl 12 befreit. In der normalen Betriebsposition ist die Abscheideeinrichtung 10 räumlich entsprechend der Figur 1 angeordnet. Dabei befindet sich die Abscheidevorrichtung 10 in normaler Betriebsposition räumlich oben und der Anschlusskopf 16 räumlich unten.

Die Abscheidevorrichtung 10 umfasst ein Gehäuse 18. Das Gehäuse 18 weist einen becherförmigen Gehäusetopf 20 auf, dessen offene Seite, in normaler Betriebsposition räumlich unten, mit einem Gehäusedeckel 22 verschlossen ist. Der Gehäusedeckel 22 ist mittels einer hier nicht weiter interessierenden Bördelverbindung dicht mit dem Gehäusetopf 20 verbunden.

Der Gehäusedeckel 22 umfasst eine zentrale Öffnung, welche als Gasauslass 24 für von Öl 12 befreites Gas 14 dient. Der Gasauslass 24 ist kreisförmig und koaxial zu einer gedachten Verbindungsachse 26.

Wenn bei der Beschreibung von "radial", "koaxial", "axial", "tangential", "umfangsmäßig", "konzentrisch", "exzentrisch" oder dergleichen die Rede ist, so bezieht sich dies, sofern nicht anders erwähnt, auf die Verbindungsachse 26.

Ein radial innerer Abschnitt des Gehäusedeckels 22, welcher den Gastauslass 24 umgibt, ist kreiszylindrisch geformt und erstreckt sich koaxial in einen Gehäuseinnenraum 32 des Gehäuses 18. Die radial innere Umfangsseite des Gehäusedeckels 22, respektive des kreiszylindrischen radial inneren Abschnitts, weist ein Innengewinde 28 auf. Der Gasauslass 24 dient so zusätzlich als Verbindungsaufnahme für einen Verbindungsstutzen 30, welcher aufseiten des Anschlusskopfs 16 befestigt ist.

Radial außen ist der Gasauslass 24 von einer Mehrzahl von Ölabläufen 34 umgeben. Die Ölabläufe 34 sind umfangmäßig verteilt angeordnet. Die Ölabläufe 34 führen jeweils durch den Gehäusedeckel 22.

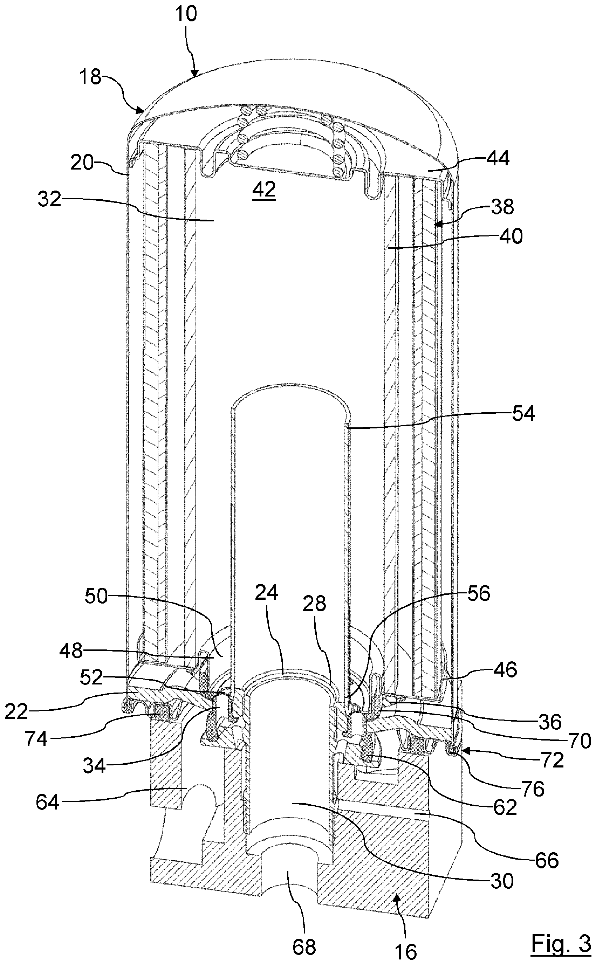

Durch den Gehäusedeckel 22 führt ferner eine Mehrzahl von Gaseinlässen 36. In der Figur 3 ist beispielhaft einer der Gaseinlässe 36 erkennbar. Die Gaseinlässe 36 befinden sich in einem Ringabschnitt des Gehäusedeckels 22, welcher die Ölabläufe 34 radial außen umgibt.

In dem Gehäuse 18 ist ein Ölabscheideeinsatz 38 angeordnet. Der Ölabscheideeinsatz 38 ist insgesamt beispielhaft kreiszylindrisch aufgebaut und koaxial angeordnet. Der Ölabscheideeinsatz 38 umfasst ein Abscheidemedium 40 für das Öl 12. Das Ölabscheidemedium 40 kann beispielsweise als sogenanntes Koaleszenzmedium ausgestaltet sein. So kann der Ölabscheideeinsatz 38 insgesamt als Koaleszenzeinsatz realisiert sein. Das Abscheidemedium 40 umgibt einen Einsatzinnenraum 42 des Ölabscheideeinsatzes 38 umfangsmäßig zusammenhängend.

An der dem Gehäusedeckel 22 axial abgewandten Seite ist der Ölabscheideeinsatz 38 mit einer oberen Endscheibe 44 versehen, mit welcher der Einsatzinnenraum 42 dort verschlossen wird.

Auf der axial gegenüberliegenden, dem Gehäusedeckel 22 zugewandten Seite verfügt der Ölabscheideeinsatz 38 über eine Anschlussendscheibe 46. Die Anschlussendscheibe 46 weist eine koaxiale Öffnung auf, welche größer ist als der Gasauslass 24.

Die Anschlussendscheibe 46 ist in einem radial inneren Abschnitt, in dem sie den Einsatzinnenraum 42 überlappt, mehrfach gebogen, sodass sie eine radial äußere Umfangswandung 48 für einen Ölsammelraum 50 bildet. In dem Ölsammelraum 50 kann abgeschiedenes Öl 12, welches der Schwerkraft folgend nach unten sinkt, gesammelt werden. In dem Boden des Ölsammelraums 50 sind Durchlassöffnungen 52 angeordnet. Die Durchlassöffnungen 52 korrespondieren bei eingebautem Ölabscheideeinsatz 38 mit den entsprechenden Ölabläufen 34. Durch die Durchlass-öffnung 52 kann das Öl 12 aus dem Ölsammelraum 50 in die Ölabläufe 34 fließen.

Der Ölabscheideeinsatz 38 ist insgesamt so in dem Gehäuse 18 angeordnet, dass das Abscheidemedium 40 die Gaseinlässe 36 von dem Gastauslass 24 trennt. Auf diese Weise muss das Gas 14 das Abscheidemedium 40 durchströmen und wird dabei von dem Öl 12 befreit.

Der Einsatzinnenraum 42, der Ölsammelraum 50, die Durchlassöffnungen 52 und die Ölabläufe 34 befinden sich auf der Reingasseite des Ölabscheideeinsatzes 38.

In den Gehäuseinnenraum 32, respektive den Einsatzinnenraum 42, erstreckt sich koaxial ein Rohrabschnitt 54. Der Rohrabschnitt 54 ist beispielhaft kreiszylindrisch. Der Rohrabschnitt 54 weist ein Verbindungsende 56 auf, mit dem er an einer radial äußeren Umfangsseite des kreiszylindrisch geformten radial inneren Abschnitts des Gehäusedeckels 22 befestigt ist. Zwischen dem Verbindungsende 56 und dem radial inneren Abschnitt des Gehäusedeckels 22 ist eine nicht gezeigte Dichtung angeordnet.

Der Rohrabschnitt 54 erstreckt sich in axialer Richtung etwa über die Hälfte der axialen Höhe des Einsatzinnenraums 42. Er überragt damit die Umfangswandung 48 des Ölsammelraums 50 in axialer Richtung. Mithilfe des Rohrabschnitts 54 wird verhindert, dass in dem Ölsammelraum 50 aufgefangenes Öl 12 in den Gasauslass 24 gelangen kann.

Das Verbindungsende 56 befindet sich dabei radial zwischen dem radial inneren Abschnitt, welcher den Gasauslass 24 umgibt, einerseits und den Durchlassöffnungen 52 und den Ölabläufen 34 andererseits.

Ein Innendurchmesser 58 des Rohrabschnitts 54 ist größer als ein Innendurchmesser 60 des Gasauslasses 24 und größer als ein Innendurchmesser der Verbindungsaufnahme für den Verbindungsstutzen 30. Ferner ist der Innendurchmesser 58 des Rohrabschnitts 54 größer als der Innendurchmesser des Verbindungsstutzens 30. Auf diese Weise können Turbulenzen beim Ausströmen des von Öl 12 befreiten Gases 14 vermieden werden.

Eine erste Dichtung 62 erstreckt sich auf der dem Gehäuseinnenraum 32 axial abgewandten Außenseite des Gehäusedeckels 22 umfangsmäßig über den Ölabläufen 34. Dabei weist die erste Dichtung 62 jeweils im Bereich der Ölabläufe 34 einen Hohlzylinderabschnitt auf, welcher sich durch den jeweiligen Ölablauf 34 erstreckt. Auf der dem Gehäusedeckel 22 axial abgewandten Seite weist die erste Dichtung 62 radial außen einen sich in axialer Richtung von dem Gehäusedeckel 22 weg erstreckenden hohlzylindrischen Abschnitt auf.

Mit der ersten Dichtung 62 wird die Reingasseite im Bereich des Gasauslasses 24 gegen die Ölabläufe 34 und den Ölsammelraum 50 abgedichtet. Die Dichtung 62 weist in Richtung Anschlusskopf 16 und liegt zum Erzielen der Dichtfunktion bevorzugt radial oder auch axial dichtend am Anschlusskopf, bevorzugt wie gezeigt am Verbindungsstutzen 30 an. Außerdem werden bei montierter Abscheidevorrichtung 10 mit der ersten Dichtung 62 die Ölabläufe 34 gegen einen rohgasseitigen Gaszufuhrkanal 64 im Anschlusskopf 16 abgedichtet.

Der Gaszufuhrkanal 64 korrespondiert bei montierter Abscheidevorrichtung 10 mit den Gaseinlässen 36 der Abscheidevorrichtung 10. Die Ölabläufe 34 korrespondieren bei montierter Abscheidevorrichtung 10 mit einem Ölablaufkanalsystem 66 des Anschlusskopfs 16. Der Verbindungsstutzen 30 ist innen hohl und bildet damit einen Teil eines Gasabfuhrkanals 68 des Anschlusskopfs 16.

Zwischen der Anschlussendscheibe 46 und dem Gehäusedeckel 22 ist ferner im Gehäuseinnenraum 32 eine ringförmige zweite Dichtung 70 angeordnet. Die zweite Dichtung 70 umgibt den Ölsammelraum 50, die Durchlassöffnungen 52 und die Ölabläufe 34 radial außen. Die zweite Dichtung 70 trennt die Rohgasseite des Ölabscheidereinsatzes 38 von den Ölabläufen 34 und von der Reingasseite. Ölabläufe 34 und Reingasseite weisen im Betrieb ein gleiches oder ähnliches, gegenüber der Rohgasseite geringeres Druckniveau auf. Die zweite Dichtung 70 liegt mit ihrer radial inneren Umfangsseite an den hohlzylindrischen Abschnitten der ersten Dichtung 62 an.

Der als Verbindungsaufnahme ausgestaltete Gasauslass 24 mit dem Innengewinde 28 bildet eine Verbindungseinrichtung 72, mit welcher die Abscheideeinrichtung 10 mit dem Anschlusskopf 16 verbunden werden kann.

Die Abscheidevorrichtung 10 umfasst ferner eine äußere Ringdichtung 74, welche sich an der dem Anschlusskopf 16 zugewandten Außenseite des Gehäuses 18 befindet. Die Ringdichtung 74 ist in einer entsprechenden Dichtungsnut an einem Verbindungsblech 76 angeordnet. Mit der äußeren Ringdichtung 74 werden die Ölabläufe 34, die Gaseinlässe 36 und der Gasauslass 24 zur Umgebung hin abgedichtet. Die äußere Ringdichtung 74 liegt dazu in axialer Richtung dichtend an einer entsprechend Dichtfläche aufseiten des Anschlusskopfs 16 an.

Das Verbindungsblech 76 befindet sich auf der dem Gehäuseinnenraum 32 axial abgewandten Außenseite des Gehäusedeckels 22. Mit dem Verbindungsblech 76 wird die Bördelverbindung des Gehäusedeckels 22 mit dem Gehäusetopf 20 realisiert. Der Gehäusedeckel 22 wird mit hier nicht weiter interessierenden Laschen des Verbindungsblechs 76 fixiert.

Zur Verbindung der Abscheidevorrichtung 10 mit dem Anschlusskopf 16 wird die Abscheidevorrichtung 10 mit dem Gehäusedeckel 22 voran auf den Verbindungsstutzen 30 der Anschlusskopfes 16 geschraubt. Dabei greift ein entsprechendes Außengewinde aufseiten des Verbindungsstutzens 30 in das Innengewinde 28 aufseiten des Gasauslasses 24 ein. Beim Aufschrauben werden automatisch die erste Dichtung 62 und die äußere Ringdichtung 74 mit entsprechenden Dichtflächen aufseiten des Anschlusskopfs 16 in Verbindung gebracht. Eine Trennung der Abscheidevorrichtung 10 vom Anschlusskopf 16 geschieht durch Abschrauben in umgekehrter Drehrichtung.

Beim Betrieb der Abscheidevorrichtung 10 wird mit Öl 12 belastetes Gas 14 durch den Gaszufuhrkanal 64 des Anschlusskopfs 16 und die Gaseinlässe 36 in den Gehäuseinnenraum 32 zur Rohseite des Ölabscheidereinsatzes 38 geleitet. Das von Öl 12 zu befreiende Gas 14 durchströmt hier nicht weiter interessierende Filtermedien, welche das Abscheidemedium 40 umfangsmäßig zusammenhängend umgeben, und das Abscheidemedium 40 von radial außen nach radial innen und gelangt in den Einsatzinnenraum 42. Dabei wird Gas 14 von dem Öl 12 befreit. Das abgeschiedene Öl 12 sinkt im Einsatzinnenraum 42 der Schwerkraft folgend nach unten in den Ölsammelraum 50. Das gesammelte Öl 12 gelangt durch die Ölabläufe 34 aus der Abscheidevorrichtung 10 heraus und wird dem Ölablaufkanal 66 des Anschlusskopfs 16 zugeführt. Das von Öl 12 befreite Gas 14 strömt in den Rohrabschnitt 54 und von dort durch den Gasauslass 24 in den Gasabfuhrkanal 68 des Anschlusskopfs 16.

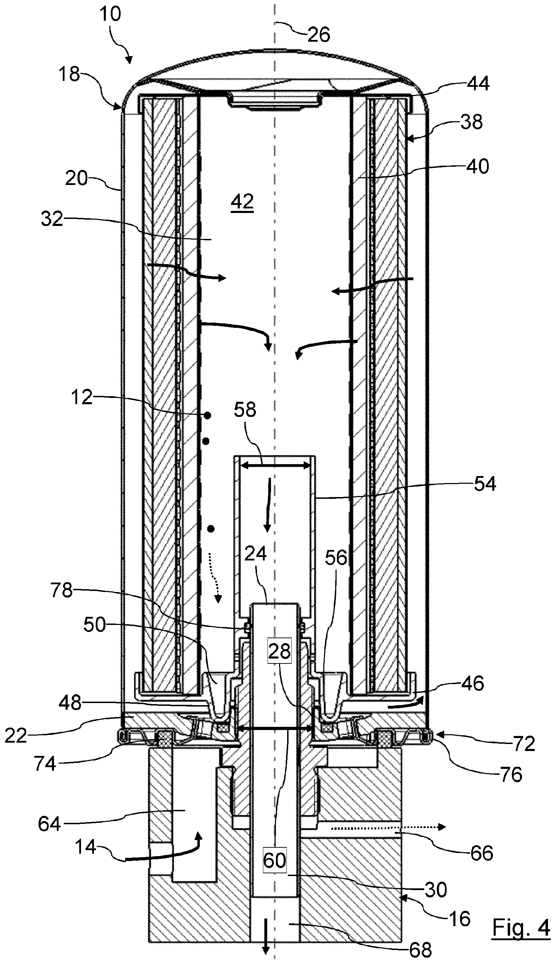

In Figur 4 ist ein zweites Ausführungsbeispiel der Abscheidevorrichtung 10 gezeigt. Diejenigen Elemente, die zu denen des ersten Ausführungsbeispiels aus Figuren 1 bis 3 ähnlich sind, sind mit denselben Bezugszeichen versehen. Das zweite Ausführungsbeispiel unterscheidet sich von dem ersten Ausführungsbeispiel dadurch, dass der Rohrabschnitt 54 mit seinen Verbindungsende 56 einstückig mit der Umfangswandung 48 des Ölsammelraums 50 verbunden ist. Dabei begrenzt das Verbindungsende 56 die den Ölsammelraum 50 radial innen. Der Rohrabschnitt 54 ist über die Umfangswandung 48 einstückig mit der Anschlussendscheibe 46 verbunden. Auf diese Weise ist der Rohrabschnitt 54 mit dem Ölabscheideeinsatz 38 verbunden. Ferner reicht der Verbindungsstutzen 30 bis in den Gehäuseinnenraum 32 des Gehäuses 18. Dabei überragt der Rohrabschnitt 54 den Verbindungsstutzen 30 in axialer Richtung. Zwischen der radial äußeren Umfangsseite des Verbindungsstutzens 30 und der radial inneren Umfangsseite des Rohrabschnitts 54 ist eine Ringdichtung 78 angeordnet.

Ferner verläuft neben der radial äußeren Umfangsseite des Verbindungsstutzens 30 eine in Figur 4 verdeckte und daher nicht gezeigte Drainageleitung. Die Drainageleitung erstreckt sich in axialer Richtung und verbindet die Rohgasseite mit dem Ölablaufkanal 66.

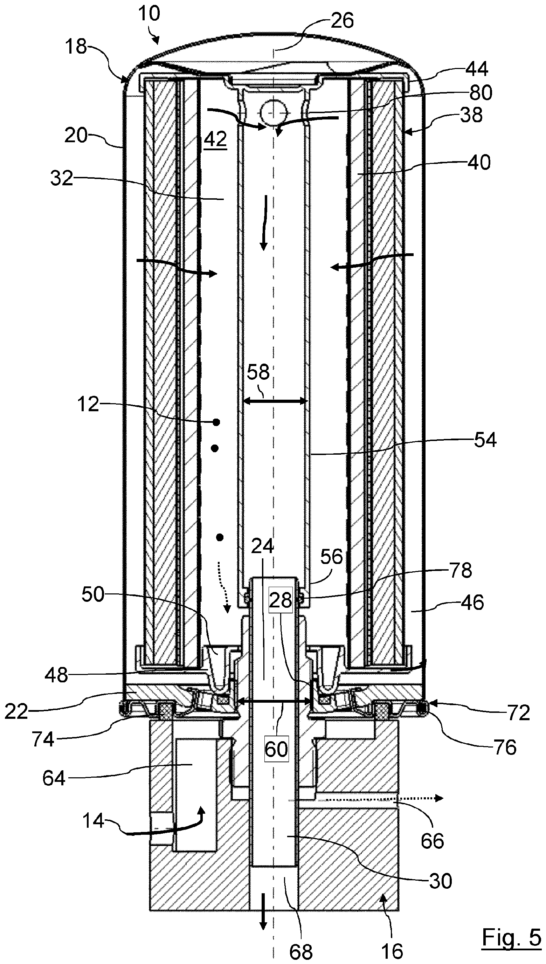

In Figur 5 ist ein drittes Ausführungsbeispiel der Abscheidevorrichtung 10 gezeigt. Diejenigen Elemente, die zu denen des ersten Ausführungsbeispiels aus Figuren 1 bis 3 ähnlich sind, sind mit denselben Bezugszeichen versehen. Das dritte Ausführungsbeispiel unterscheidet sich von dem ersten Ausführungsbeispiel dadurch, dass der Rohrabschnitt 54 mit seinen Verbindungsende 56 auf den Verbindungsstutzen 30 gesteckt ist. Dabei reicht der Verbindungsstutzen 30 bis in den Gehäuseinnenraum 32 des Gehäuses 18. Der Rohrabschnitt 54 ist über Verbindungsstutzen 30 mit dem Gehäuse 18 verbunden. Zwischen der radial äußeren Umfangsseite des Verbindungsstutzens 30 und der radial inneren Umfangsseite des Rohrabschnitts 54 ist eine Ringdichtung 78 angeordnet.

Ferner reicht der Rohrabschnitt 54 bis zur oberen Endscheibe 44 des Ölabscheidereinsatzes 38. Mit seinem dortigen Ende ist der Rohrabschnitt 54 einstückig mit der oberen Endscheibe 44 und so mit dem Ölabscheideeinsatz 38 verbunden. Die axiale Stirnseite des Rohrabschnitts 54 aufseiten der oberen Endscheibe 44 ist geschlossen. An seiner Umfangswand unterhalb der Endscheibe 44 weist der Rohrabschnitt 54 mehrere Durchlassöffnungen 80 für Gas auf.

Ferner verläuft neben der radial äußeren Umfangsseite des Verbindungsstutzens 30 eine in der Figur 5 verdeckte und daher nicht gezeigte Drainageleitung. Die Drainageleitung erstreckt sich in axialer Richtung und verbindet die Reingasseite mit dem Ölablaufkanal 66.

## Patentansprüche

1. Abscheidevorrichtung (10) zur Abscheidung von Flüssigkeit (12) aus Gas, insbesondere Luft (14), mit einem Gehäuse (18), welches aufweist
- eine Verbindungseinrichtung (24, 28), mit welcher die Abscheidevorrichtung (10) mittels einer Dreh- und/oder Steckbewegung bezüglich einer gedachten Verbindungsachse (26) mit einem Anschlusskopf (16) einer Maschine trennbar verbunden werden kann,
- wenigstens einen Gaseinlass (36) für das von Flüssigkeit (12) zu befreiende Gas (14),
- wenigstens einen Gasauslass (24) für das von Flüssigkeit (12) befreite Gas (14), welcher die Verbindungsachse (26) umfangsmäßig umgibt,
- und wenigstens einen Flüssigkeitsablauf (34) für abgeschiedene Flüssigkeit (12),
- wobei in dem Gehäuse (18) wenigstens ein von dem Gas (14) durchströmbares Abscheidemedium (40) angeordnet ist, welches den wenigstens einen Gaseinlass (36) bezüglich der Gasströmung von dem wenigstens einen Gasauslass (24) trennt,
- wobei der wenigstens eine Gasauslass (24) und der wenigstens eine Flüssigkeitsablauf (34) auf der Seite aus dem Gehäuse (18) führen, auf der die Verbindungseinrichtung (24, 28) angeordnet ist,
- wobei der wenigstens eine Flüssigkeitsablauf (34) aus einem Flüssigkeitssammelraum (50) heraus führt, der auf einer Reingasseite des Abscheidemediums (40) angeordnet ist und der die Verbindungsachse (26) und den wenigstens einen Gasauslass (24) umfangsmäßig umgibt,
- wobei in dem Gehäuseinnenraum (32) des Gehäuses (18) ein Rohrabschnitt (54) zu dem wenigstens einen Gasauslass (24) führt, der die Verbindungsachse (26) umfangsmäßig umgibt und der eine radial innere Begrenzung des Flüssigkeitssammelraums (50) wenigstens mit bildet,
**dadurch gekennzeichnet, dass** der Rohrabschnitt (54) funktional von mechanischen kraftübertragenden Verbindungselementen der Verbindungseinrichtung (24, 28) getrennt ist, wobei der Rohrabschnitt (54) bezüglich einer mechanischen Kraftübermittlung getrennt von der eigentlichen Verbindungseinrichtung (24, 28) realisiert ist, wobei sich der Rohrabschnitt (54) ausschließlich im Gehäuseinnenraum (32) des Gehäuses (18) erstreckt, wobei der wenigstens eine Gasauslass (24) als Verbindungsaufnahme für einen Verbindungsstutzen (30) ausgestaltet ist, wobei der Verbindungsstutzen (30) aufseiten des Anschlusskopfs (16) ist, wobei der Verbindungsstutzen (30) fest oder trennbar mit dem Anschlusskopf (16) verbunden ist oder werden kann.

2. Abscheidevorrichtung nach Anspruch 1, **dadurch gekennzeichnet, dass** der Rohrabschnitt (54) mit einem Befestigungsende (56) direkt oder indirekt mit dem Gehäuse (18) verbunden ist und/oder der Rohrabschnitt (54) direkt oder indirekt mit einem Abscheideeinsatz (38) der Abscheidevorrichtung (10) verbunden ist, welcher in dem Gehäuse (18) angeordnet ist.

3. Abscheidevorrichtung nach einem der vorigen Ansprüche, **dadurch gekennzeichnet, dass** das freie Ende des Rohrabschnitts (54) eine radial äußere Umfangswandung (48) des Flüssigkeitssammelraums (50) in bezüglich der Verbindungsachse (26) axialer Richtung überragt.

4. Abscheidevorrichtung nach einem der vorigen Ansprüche, **dadurch gekennzeichnet, dass** ein Innendurchmesser (58) des Rohrabschnitts (54) zumindest im Bereich seines Befestigungsendes (56) größer ist als ein Innendurchmesser (60) des wenigstens einen Gasauslasses (24).

5. Abscheidevorrichtung nach einem der vorigen Ansprüche, **dadurch gekennzeichnet, dass** der Rohrabschnitt (54) aus Kunststoff ist.

6. Abscheidevorrichtung nach einem der vorigen Ansprüche, **dadurch gekennzeichnet, dass** der wenigstens eine Gasauslass (24) koaxial zur Verbindungssachse (26) angeordnet ist.

7. Abscheidevorrichtung nach einem der vorigen Ansprüche, **dadurch gekennzeichnet, dass** ein den wenigstens einen Gasauslass (24) umgebender Teil des Gehäuses (18) ein mechanisches Verbindungselement (28) der Verbindungseinrichtung (24, 28) aufweist.

8. Abscheidevorrichtung nach einem der vorigen Ansprüche, **dadurch gekennzeichnet, dass** wenigstens ein Gaseinlass (36) auf derselben Seite in das Gehäuse (18) führt, auf der der Flüssigkeitsablauf (34) und der wenigstens eine Gasauslass (24) aus dem Gehäuse (18) führen.

9. Abscheidevorrichtung nach einem der vorigen Ansprüche, **dadurch gekennzeichnet, dass** der wenigstens eine Gasauslass (24) und der wenigstens eine Flüssigkeitsablauf (34) von wenigstens einer ringförmigen Dichteinrichtung (70) umgeben sind.

10. Abscheidevorrichtung nach einem der vorigen Ansprüche, **dadurch gekennzeichnet, dass** zwischen dem wenigstens einen Flüssigkeitsablauf (34) und dem wenigstens einen Gaseinlass (36) wenigstens eine Dichteinrichtung (62) angeordnet ist.

11. Abscheidesystem (10, 16) einer Maschine
- mit wenigstens einer Abscheidevorrichtung (10) zur Abscheidung von Flüssigkeit (12) aus Gas (14), mit einem Gehäuse (18), welches aufweist
- eine Verbindungseinrichtung (24, 28), mit welcher die Abscheidevorrichtung (10) mittels einer Dreh- und/oder Steckbewegung bezüglich einer gedachten Verbindungsachse (26) mit einem Anschlusskopf (16) einer Maschine trennbar verbunden ist,
- und mit einem Anschlusskopf (16) zum Anschließen der wenigstens einen Abscheidevorrichtung (10), an welchem ein Anschlussstutzen angeordnet ist, der mit der Verbindungseinrichtung (24, 28) der Abscheidevorrichtung (10) trennbar verbunden ist,
**dadurch gekennzeichnet, dass** das Abscheidesystem (10,16) wenigstens eine Abscheidevorrichtung (10) nach einem der vorigen Ansprüche aufweist.

## Claims

1. A separating device (10) for separating liquid (12) from gas, in particular air (14), having a housing (18) featuring
- a connecting means (24, 28) with which the separating device (10) can be connected separably to a connecting head (16) of a machine using a rotary and/or plug-in movement with respect to an imaginary connecting axis (26),
- at least one gas inlet (36) for the gas (14) to be cleaned from liquid (12),
- at least one gas outlet (24) for the gas (14) cleaned from liquid (12), said gas outlet circumferentially surrounding the connecting axis (26),
- and at least one liquid drain (34) for separated liquid (12),
- wherein at least one separating medium (40) through which the gas (14) can flow is disposed in the housing (18), said separating medium separating the at least one gas inlet (36) from the at least one gas outlet (24) with respect to the gas flow,
- wherein the at least one gas outlet (24) and the at least one liquid drain (34) exit the housing (18) on the side on which the connecting means (24, 28) is disposed,
- wherein the at least one liquid drain (34) exits a liquid collecting chamber (50) disposed on a clean gas side of the separating medium (40) and circumferentially surrounding the connecting axis (26) and the at least one gas outlet (24),
- wherein a pipe section (54) leads to the at least one gas outlet (24) in the housing interior space (32) of the housing (18), said pipe section circumferentially surrounding the connecting axis (26) and at least partially forming a radial inner delimitation of the liquid collecting chamber (50),
**characterized in that** the pipe section (54) is functionally separated from mechanical force-transmitting connecting elements of the connecting means (24, 28), wherein the pipe section (54) is realized separately from the actual connecting means (24, 28) with respect to a mechanical force transmission, wherein the pipe section (54) extends exclusively in the housing interior space (32) of the housing (18), wherein the at least one gas outlet (24) is designed as a connection receptacle for a connecting piece (30), wherein the connecting piece (30) is on the side of the connecting head (16), wherein the connecting piece (30) is or can be connected to the connecting head (16) in a fixed or separable manner.

2. The separating device according to claim 1, **characterized in that** the pipe section (54) is connected by a fastening end (56) directly or indirectly to the housing (18) and/or the pipe section (54) is connected directly or indirectly to a separating insert (38) of the separating device (10) disposed in the housing (18).

3. The separating device according to one of the preceding claims, **characterized in that** the free end of the pipe section (54) projects beyond a radially exterior peripheral wall (48) of the liquid collecting chamber (50) in the axial direction with respect to the connecting axis (26).

4. The separating device according to one of the preceding claims, **characterized in that** an internal diameter (58) of the pipe section (54) is larger at least in the area of its fastening end (56), than an internal diameter (60) of the at least one gas outlet (24).

5. The separating device according to one of the preceding claims, **characterized in that** the pipe section (54) is made of plastic material.

6. The separating device according to one of the preceding claims, **characterized in that** the at least one gas outlet (24) is disposed coaxially with respect to the connecting axis (26).

7. The separating device according to one of the preceding claims, **characterized in that** one part of the housing (18) surrounding the at least one gas outlet (24) features a mechanical connecting element (28) of the connecting means (24, 28).

8. The separating device according to one of the preceding claims, **characterized in that** at least one gas inlet (36) leads into the housing (18) on the same side on which the liquid drain (34) and the at least one gas outlet (24) lead out of the housing (18).

9. The separating device according to one of the preceding claims, **characterized in that** the at least one gas outlet (24) and the at least one liquid drain (34) are surrounded by at least one ring-shaped sealing means (70).

10. The separating device according to one of the preceding claims, **characterized in that** at least one sealing means (62) is disposed between the at least one liquid drain (34) and the at least one gas inlet (36).

11. A separation system (10, 16) of a machine
- having at least one separating device (10) for separating liquid (12) from gas, in particular air (14), having a housing (18) featuring
- a connecting means (24, 28) with which the separating device (10) is connected separably to a connecting head (16) of a machine using a rotary and/or plug-in movement with respect to an imaginary connecting axis (26),
- and having a connecting head (16) for connecting the at least one separating device (10), on which a union is disposed which is separably connected to the connecting means (24, 28) of the separating device (10), **characterized in that** the separation system (10, 16) features at least one separating device (10) according to one of the preceding claims.

## Revendications

1. Dispositif de séparation (10) destiné à séparer un liquide (12) d'un gaz, notamment de l'air (14), ayant un boîtier (18) présentant
- un dispositif de raccordement (24, 28), avec lequel le dispositif de séparation (10) peut être relié de manière séparable à une tête de raccordement (16) d'une machine par un mouvement de rotation et/ou d'enfichage par rapport à un axe de raccordement imaginaire (26),
- au moins une entrée de gaz (36) pour le gaz (14) à séparer du liquide (12),
- au moins une sortie de gaz (24) pour le gaz (14) séparé du liquide (12), qui entoure l'axe de raccordement (26) dans le sens circonférentiel,
- et au moins un écoulement de liquide (34) pour le liquide séparé (12),
- dans lequel au moins un milieu séparateur (40) pouvant être traversé par le gaz (14) est disposé dans le boîtier (18), lequel milieu séparateur sépare l'entrée de gaz (36), au moins au nombre d'une, par rapport au flux de gaz, de la sortie de gaz (24), au moins au nombre d'une,
- dans lequel la sortie de gaz (24), au moins au nombre d'une, et l'écoulement de liquide (34), au moins au nombre d'un, mènent hors du boîtier (18) sur le côté où le dispositif de raccordement (24, 28) est disposé,
- dans lequel l'écoulement de liquide (34), au moins au nombre d'un, mène hors d'un espace collecteur de liquide (50) qui est disposé sur un côté de gaz pur du milieu séparateur (40) et qui entoure dans le sens circonférentiel l'axe de raccordement (26) et la sortie de gaz (24), au moins au nombre d'une,
- dans lequel, dans l'espace intérieur (32) du boîtier (18), une section de tuyau (54) mène à la sortie de gaz (24), au moins au nombre d'une, qui entoure l'axe de raccordement (26) dans le sens circonférentiel et qui participe à la réalisation d'une délimitation radialement intérieure de l'espace collecteur de liquide (50),
**caractérisé en ce que** la section de tuyau (54) est fonctionnellement séparée des éléments de raccordement transmettant la force mécanique du dispositif de raccordement (24, 28), dans lequel la section de tuyau (54) est réalisée séparément du dispositif de raccordement (24, 28) proprement dit par rapport à une transmission de force mécanique, dans lequel la section de tuyau (54) s'étend exclusivement dans l'espace intérieur (32) du boîtier (18), dans lequel la sortie de gaz (24), au moins au nombre d'une, est réalisée sous la forme d'un logement de liaison pour un embout de liaison (30), dans lequel l'embout de liaison (30) est situé du côté de la tête de raccordement (16), dans lequel l'embout de liaison (30) est relié ou peut être relié de manière fixe ou séparable à la tête de raccordement (16).

2. Dispositif de séparation selon la revendication 1, **caractérisé en ce que** la section de tuyau (54) est reliée directement ou indirectement au boîtier (18) par une extrémité de fixation (56) et/ou la section de tuyau (54) est reliée directement ou indirectement à un insert de séparation (38) du dispositif de séparation (10), qui est disposé dans le boîtier (18).

3. Dispositif de séparation selon l'une quelconque des revendications précédentes, **caractérisé en ce que** l'extrémité libre de la section de tuyau (54) dépasse une paroi périphérique radialement extérieure (48) de l'espace collecteur de liquide (50) dans une direction axiale par rapport à l'axe de raccordement (26).

4. Dispositif de séparation selon l'une quelconque des revendications précédentes, **caractérisé en ce qu'**un diamètre intérieur (58) de la section de tuyau (54) est plus grand, au moins dans la zone de son extrémité de fixation (56), qu'un diamètre intérieur (60) de la sortie de gaz (24), au moins au nombre d'une.

5. Dispositif de séparation selon l'une quelconque des revendications précédentes, **caractérisé en ce que** la section de tuyau (54) est en matière plastique.

6. Dispositif de séparation selon l'une quelconque des revendications précédentes, **caractérisé en ce que** la sortie de gaz (24), au moins au nombre d'une, est disposée coaxialement à l'axe de raccordement (26).

7. Dispositif de séparation selon l'une quelconque des revendications précédentes, **caractérisé en ce qu'**une partie du boîtier (18) entourant la, sortie de gaz (24), au moins au nombre d'une, présente un élément de raccordement mécanique (28) du dispositif de raccordement (24, 28).

8. Dispositif de séparation selon l'une quelconque des revendications précédentes, **caractérisé en ce qu'**au moins une entrée de gaz (36) débouche dans le boîtier (18) du même côté que celui par lequel l'écoulement de liquide (34) et la sortie de gaz (24), au moins au nombre d'une, mènent hors du boîtier (18).

9. Dispositif de séparation selon l'une quelconque des revendications précédentes, **caractérisé en ce que** la sortie de gaz (24), au moins au nombre d'une, et l'écoulement de liquide (34), au moins au nombre d'un, sont entourées par au moins un dispositif d'étanchéité annulaire (70).

10. Dispositif de séparation selon l'une quelconque des revendications précédentes, **caractérisé en ce qu'**au moins un dispositif d'étanchéité (62) est disposé entre l'écoulement de liquide (34), au moins au nombre d'un, et l'entrée de gaz (36), au moins au nombre d'une.

11. Système de séparation (10, 16) d'une machine
- ayant au moins un dispositif de séparation (10) destiné à séparer un liquide (12) d'un gaz (14), ayant un boîtier (18) qui présente
- un dispositif de raccordement (24, 28), avec lequel le dispositif de séparation (10) est relié de manière séparable à une tête de raccordement (16) d'une machine par un mouvement de rotation et/ou d'enfichage par rapport à un axe de raccordement imaginaire (26),
- et ayant une tête de raccordement (16) destinée à relier le dispositif de séparation (10), au moins au nombre d'un, sur laquelle est disposée une tubulure de raccordement qui est reliée de manière séparable au dispositif de raccordement (24, 28) du dispositif de séparation (10),
**caractérisé en ce que** le système de séparation (10, 16) présente au moins un dispositif de séparation (10) selon l'une quelconque des revendications précédentes.
